# EUROPEAN PATENT APPLICATION

(11) **EP 2 696 533 A1**
(43) Date of publication of application: **12.02.2014**
(21) Application number: 11862952.6
(22) Date of filing: 16.09.2011
(51) Int. Cl.: H04L 12/24, H04W 24/02, H04W 28/02

(54) **RESOURCE OPTIMIZATION METHOD BASED ON SERVICE LICENSE AND DEVICE THEREOF**

(30) Priority: 08.04.2011 CN 201110088438
(71) Applicant: ZTE Corporation, Shenzhen, Guangdong 518057 (CN)
(72) Inventor: ZHANG, Chao, Shenzhen Guangdong 518057 (CN); ZHANG, Lingdong, Shenzhen Guangdong 518057 (CN); SUN, Lei, Shenzhen Guangdong 518057 (CN); ZHAO, Qingchun, Shenzhen Guangdong 518057 (CN); GUO, Yamei, Shenzhen Guangdong 518057 (CN)
(74) Representative: Ahner, Philippe
(86) International application number: PCT/CN2011/079767
(87) International publication number: WO 2012/136049

(57) **Abstract**

The disclosure discloses a resource optimization method based on service licensing and device thereof. The method includes: configuring a range of a licensed amount of a blade server and conversion relationships between respective service flows and the licensed amount; monitoring a service and a service flow on each blade server; and when the monitored service flow on a blade server is not within a range of a service flow corresponding to the range of the licensed amount of the blade server, optimizing use of the blade server. With the present disclosure, based on unified license management of different services in actual operation, blade server resources can be utilized reasonably and efficiently by taking into consideration a capacity of a blade server to bear a corresponding service and a running condition of the service, such that each service can be better developed and license resources are utilized to the greatest extent.

## Description

### TECHNICAL FIELD

The disclosure relates to the field of communication service licensing technology, and in particular to a resource optimization method based on service licensing and device thereof.

### BACKGROUND

Current telecommunication operation is developing toward a centralized service deployment and multi-service integration mode. When service deployment is performed, a series of related services such as a Short Messaging Service (SMS), a Multimedia Messaging Service (MMS), a Wireless Application Protocol (WAP) are often deployed together, and service processors running on one blade server is generally used to process one service, namely, one blade server corresponds to one service, and each service can be borne by multiple blade servers. However, each service needs to be managed using its own license management. Management by an operator is cumbersome and inefficient.

At a present stage, all operators, especially transnational operators, face tough competition, and cost reduction and control has thus become a top priority of the operators in order to produce a maximum profit with a minimum investment. When purchasing license management, an operator usually subscribes according to an estimated maximum load, while in actual operation, use of licenses depends on services. An actual usage amount of a license tends to be less than a subscribed amount, and there are cases such as a mismatch between the license management of various services and an actual demand. Furthermore, a capacity of a blade server to bear a corresponding service is not taken into account either, causing enormous waste of a licensed amount and of blade server resources. There is a need for a better dynamic license optimization solution in actual operation.

### SUMMARY

A technical problem to be solved by the disclosure is to provide a resource optimization method based on service licensing and device thereof, to overcome the drawbacks of the related art and utilize blade server resources reasonably and efficiently.

A technical solution of the disclosure is a resource optimization method based on service licensing, including:
configuring a range of a licensed amount of a blade server and conversion relationships between respective service flows and the licensed amount;
monitoring a service and a service flow on each blade server; and
when the monitored service flow on a blade server is not within a range of a service flow corresponding to the range of the licensed amount of the blade server, optimizing use of the blade server.

Furthermore, the range of the licensed amount of the blade server may include: a range from a valley value of the licensed amount of the blade server to a peak value of the licensed amount of the blade server.

Furthermore, the step of optimizing use of the blade server when the monitored service flow on a blade server is not within a range of a service flow corresponding to the range of the licensed amount of the blade server may include:
when the monitored service flow on the blade server is greater than or equal to a service flow corresponding to the peak value of the licensed amount of the blade server, calling an idle blade server to process the monitored service flow; and
when the monitored service flow on the blade server is less than a service flow corresponding to the valley value of the licensed amount of the blade server, scheduling the blade server as an idle blade server while ensuring a normal operation of the service.

The method may further include: configuring a licensed amount adjustment parameter;
when monitoring the service and the service flow on each blade server, summing service flows of each type of service on blade servers according to types of services to obtain a service flow corresponding to the each type of service; and
after the optimizing use of the blade server, when the service flow of a service on a blade server satisfies a licensed amount adjustment condition, adjusting the licensed amount of the service.

Furthermore, the licensed amount adjustment parameter may include: a licensed amount adjustment peak value and a licensed amount adjustment valley value;
the step of when the service flow of a service on a blade server satisfies a licensed amount adjustment condition, adjusting the licensed amount of the service may include:
when a ratio of a current service flow of the service to a flow corresponding to the licensed amount allocated for the service is greater than or equal to the licensed amount adjustment peak value, allocating a new licensed amount for the service; and
when a ratio of a current service flow of the service to a flow corresponding to the licensed amount allocated for the service is less than the licensed amount adjustment valley value, making a part of the licensed amount occupied by the service to be a surplus licensed amount while ensuring a normal operation of the service.

A resource optimization device based on service licensing includes: a configuring module, a control center module, and a scheduling center module, wherein
the configuring module is configured to configure a range of a licensed amount of a blade server and conversion relationships between respective service flows and the licensed amount;
the control center module is configured to: monitor a service and a service flow on each blade server; and when the monitored service flow on a blade server is not within a range of a service flow corresponding to the range of the licensed amount of the blade server, control the scheduling center module to optimize use of the blade server; and
the scheduling center module is configured to optimize use of a blade server.

Furthermore, the range of the licensed amount of the blade server may include: a range from a valley value of the licensed amount of the blade server to a peak value of the licensed amount of the blade server.

Furthermore, the control center module may be further configured to:
when the monitored service flow on the blade server is greater than or equal to a service flow corresponding to the peak value of the licensed amount of the blade server, to instruct the scheduling center module to call an idle blade server to process the monitored service flow; and
when the monitored service flow on the blade server is less than a service flow corresponding to the valley value of the licensed amount of the blade server, to instruct the scheduling center module to schedule the blade server as an idle blade server while ensuring a normal operation of the service.

Furthermore, the configuring module may be further configured to: configure a licensed amount adjustment parameter; and
the control center module may be further configured to: sum monitored service flows of each type of service on blade servers according to types of monitored services to obtain a service flow corresponding to the each type of service; and after optimizing use of a blade server, when the service flow of a service on a blade server satisfies a licensed amount adjustment condition, adjust the licensed amount of the service.

Furthermore, the licensed amount adjustment parameter may include: a licensed amount adjustment peak value and a licensed amount adjustment valley value; and
the control center module may be further configured to:
when a ratio of a current service flow of the service on a blade server to a flow corresponding to the licensed amount allocated for the service is greater than or equal to the licensed amount adjustment peak value, allocate a new licensed amount for the service; and
when a ratio of a current service flow of the service to a flow corresponding to the licensed amount allocated for the service is less than the licensed amount adjustment valley value, make a part of the licensed amount occupied by the service to be a surplus licensed amount while ensuring a normal operation of the service.

With the aforementioned technical solutions, the disclosure has the following advantages at least:
With the resource optimization method based on service licensing and device thereof according to the disclosure, based on unified license management of different services in actual operation, blade server resources can be utilized reasonably and efficiently by taking into consideration a capacity of a blade server to bear a corresponding service and a running condition of the service, such that each service can be better developed and license resources are utilized to the greatest extent.

### BRIEF DESCRIPTION OF THE DRAWINGS

Fig.1 is a flowchart of a resource optimization method based on service licensing according to a first embodiment; and
Fig.2 is a schematic diagram of a structure of a resource optimization device based on service licensing according to a second embodiment.

### DETAILED DESCRIPTION

In order to further illustrate the technical means adopted by the disclosure for achieving a predetermined purpose and effects thereof, the disclosure is elaborated below with reference to the drawings and preferable embodiments.

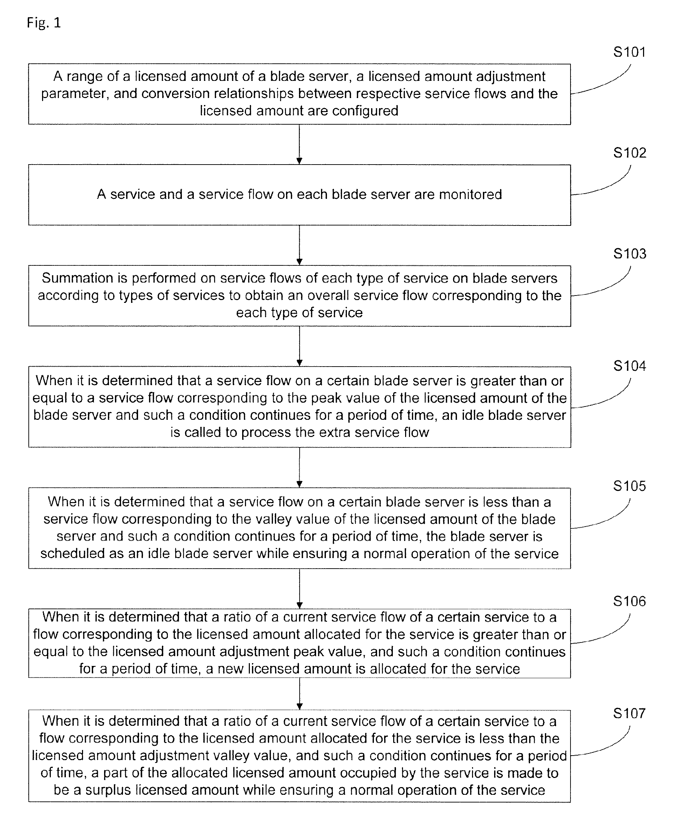

According to a first embodiment of the disclosure, a resource optimization method based on service licensing, as shown in Fig.1, includes the following specific steps:
S101: A range of a licensed amount of a blade server, a licensed amount adjustment parameter, and conversion relationships between respective service flows and the licensed amount are configured.

Here, for example, the conversion relationships may be set as follows respectively according to different services: a flow of 5000 SMS messages corresponds to one license, a flow of 50 MMS messages corresponds to one license, and a flow of 500 WAP messages corresponds to one license.

The range of the licensed amount of the blade server may also be determined according to a processing capacity of the blade server equipment, and may include: a range from a valley value of the licensed amount of the blade server to a peak value of the licensed amount of the blade server. For example, for an SMS service, after a conversion is performed according to the conversion relationship between the SMS service flow and the licensed amount, a flow corresponding to the peak value of a unit of licensed amount of the blade server is a flow of 5000 SMS messages, and a flow corresponding to the valley value of the licensed amount of the blade server is a flow of 0 SMS message.

The licensed amount adjustment parameter may include: a licensed amount adjustment peak value and a licensed amount adjustment valley value, wherein both the licensed amount adjustment peak value and the licensed amount adjustment valley value are set percentage values. The licensed amount adjustment parameter is a criterion set based on a service for determining whether a licensed amount allocation needs to be adjusted.

S102: A service and a service flow on each blade server are monitored.

S103: Summation is performed on service flows of each type of service on blade servers according to types of services to obtain an overall service flow corresponding to the each type of service.

S104: A determination is performed on a service flow on each blade server, and when it is determined that a service flow on a certain blade server is greater than or equal to a service flow corresponding to the peak value of the licensed amount of the blade server and such a condition continues for a period of time, an idle blade server is called to process the extra service flow; and this step continues until service flows on all blade servers are below the peak values of the licensed amount of the respective blade servers.

Here, a duration of the period of time in which such a condition continues can be set as needed.

In the art, if a certain service occupies multiple blade servers simultaneously, the flow of the service will be distributed among the multiple blade servers according to a certain algorithm. Therefore, whenever an idle blade server is put into use, a requirement of an actual service is met only when all service flows on blade servers on which the service runs are below peak values of the licensed amount of the respective blade servers.

S105: When it is determined that a service flow on a certain blade server is less than a service flow corresponding to the valley value of the licensed amount of the blade server and such a condition continues for a period of time, the blade server is scheduled as an idle blade server while ensuring a normal operation of the service; and this step continues until service flows on all blade servers are below the valley values of the licensed amount of the respective blade servers.

Here, likewise, a duration of the period of time in which such a condition continues can be set as needed.

S106: A determination is performed on a flow of each service, and when it is determined that a ratio of a current service flow of a certain service to a flow corresponding to the licensed amount allocated for the service is greater than or equal to the licensed amount adjustment peak value, and such a condition continues for a period of time, a new licensed amount is allocated for the service. If a newly added licensed amount has to be implemented by adding a new blade server, then an idle blade server is called; otherwise, the new licensed amount is allocated directly.

Here, likewise, a duration of the period of time in which such a condition continues can be set as needed.

S107: When it is determined that a ratio of a current service flow of a certain service to a flow corresponding to the licensed amount allocated for the service is less than the licensed amount adjustment valley value, and such a condition continues for a period of time, a part of the allocated licensed amount occupied by the service is made to be a surplus licensed amount while ensuring a normal operation of the service.

Here, likewise, a duration of the period of time in which such a condition continues can be set as needed.

It should be noted that no rigorous temporal order exists between steps S104 and S105 as well as between steps S106 and S107, and corresponding processing is to be made according to an actual operation condition of the service at that time.

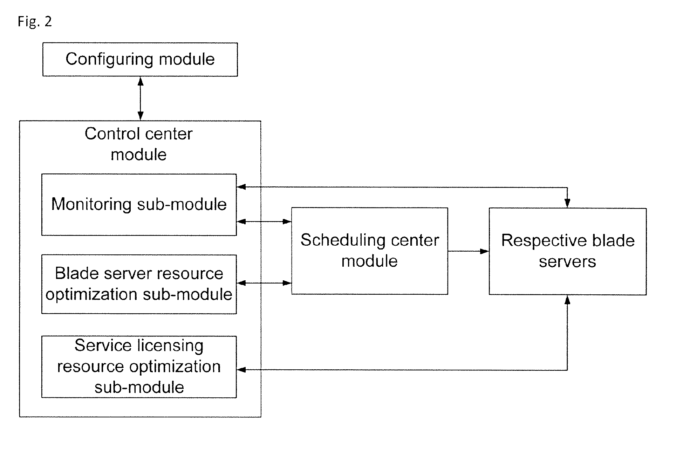

According to a second embodiment of the present disclosure, a resource optimization device based on service licensing, as shown in Fig. 2, includes: a control center module, and a scheduling center module, wherein
the configuring module is configured to configure a range of a licensed amount of a blade server, a licensed amount adjustment parameter, and conversion relationships between respective service flows and the licensed amount.

For example, the conversion relationships may be set as follows respectively according to different services: a flow of 5000 SMS messages corresponds to one license, a flow of 50 MMS messages corresponds to one license, and a flow of 500 WAP messages corresponds to one license.

The range of the licensed amount of the blade server may also be determined according to a processing capacity of the blade server equipment, and may include: a range from a valley value of the licensed amount of the blade server to a peak value of the licensed amount of the blade server. For example, for an SMS service, after a conversion is performed according to the conversion relationship between the SMS service flow and the licensed amount, a flow corresponding to the peak value of a unit of licensed amount of the blade server is a flow of 5000 SMS messages, and a flow corresponding to the valley value of the licensed amount of the blade server is a flow of 0 SMS message.

The licensed amount adjustment parameter may include: a licensed amount adjustment peak value and a licensed amount adjustment valley value, wherein both the licensed amount adjustment peak value and the licensed amount adjustment valley value are set percentage values.

The control center module further includes: a monitoring sub-module, a blade server resource optimization sub-module, and a service licensing resource optimization sub-module, wherein
the monitoring sub-module is configured to: monitor a service and a service flow on each blade server, and sum service flows of each type of service on blade servers according to types of services to obtain an overall service flow corresponding to the each type of service.

Here, before monitoring a service and a service flow on each blade server, the monitoring sub-module needs to acquire, from the scheduling center module, information such as an address of the each blade server, and the type of a service processed by the each blade server.

The blade server resource optimization sub-module is configured to: when a service flow on a certain blade server is not within a range of service flow corresponding to the range of the licensed amount of the blade server, control the scheduling center module to optimize use of the blade server as required by the service.

Specifically, when the service flow on a certain blade server is greater than or equal to a service flow corresponding to the peak value of the licensed amount of the blade server, the scheduling center module is instructed to call an idle blade server to process the extra service flow; and this step continues until service flows on all blade servers are below the peak values of the licensed amounts of the respective blade servers; and
when the service flow on a certain blade server is less than a service flow corresponding to the valley value of the licensed amount of the blade server, the scheduling center module is instructed to schedule the blade server as an idle blade server while ensuring a normal operation of the service; and this step continues until service flows on all blade servers are above the valley values of the licensed amounts of the respective blade servers.

The service licensing resource optimization sub-module is configured to: after the blade server resource optimization sub-module controls the scheduling center module to optimize use of a blade server, when the service flow of a certain service satisfies a licensed amount adjustment condition, adjust the licensed amount of the service.

Specifically, when a ratio of a current service flow of a certain service to a flow corresponding to the licensed amount allocated for the service is greater than or equal to the licensed amount adjustment peak value, a new licensed amount is allocated for the service; and
when a ratio of a current service flow of a certain service to a flow corresponding to the licensed amount allocated for the service is less than the licensed amount adjustment valley value, a part of the licensed amount occupied by the service is made to be a surplus licensed amount while ensuring a normal operation of the service,.

The scheduling center module is configured to optimize use of a blade server.

Here, the scheduling center module also holds pre-deployed information such as an address of each blade server, a type of a service processed by the each blade server, and the like.

According to a third embodiment of the disclosure, processes of adjusting, by respective components of the device, multiple service licensing resources such as SMS, MMS and WAP, as well as blade server resources are described below based on the device in the second embodiment of the disclosure.

### A licensed-amount-increasing process:

Configuring related parameters by the configuring module includes that: the control center module collects a service flow on a blade server at an interval of 30 seconds during two minutes; the number of times that an actual flow of a service exceeds 80% of a flow of the service corresponding to one license is three, and a licensed amount adjustment peak value is 80%. The number of total licenses configured currently is five, a flow corresponding to a licensed amount allocated for an SMS service is a flow of 2000 SMS messages, a flow corresponding to a licensed amount allocated for an MMS service is a flow of 200 MMS messages, and a flow corresponding to a licensed amount allocated for a WAP service is a flow of 1000 WAP messages. Corresponding relationships between the licensed amount and service flows of respective services are set as follows: one license corresponds to 2000 SMS messages, one license corresponds to 200 MMS messages, and one license corresponds to 1000 WAP messages. Thus, there are two surplus licenses. When the licensed amount is adjusted, the number of the license increases by one each time.
Step A1: The related parameters configured by the configuring module are updated at the control center module simultaneously.
Step A2: The control center module acquires, from the scheduling center module, information such as an address of a currently deployed blade server, a type of a service processed by the blade server and the like.
Step A3: The control center module collects flow information of all services from the blade servers every 30 seconds in a duration of two minutes, then calculates an average flow of each service, and obtains a current SMS flow of 3000 SMS messages, a current MMS flow of 100 MMS messages, and a current WAP flow of 600 WAP messages.
Step A4: When it is detected that the current flow of the SMS service is of 3000 SMS messages, the ratio 3000/2000 is great than 80% in this case. A count is set to one, and detection is made for the next duration.
Step A5: In the case that the count is below three, if the flow of the SMS service in the next duration is less than 1600 SMS messages, then the number of surpasses of the licensed amount adjustment peak value counted in the previous duration is set to zero. Then Step A3 is executed to continue to collect.
Step A6: When the count reaches three, the control central module begins to query a surplus licensed amount. One license is taken from the current surplus two licenses and is converted into a flow of 2000 SMS messages for the SMS service. At this moment, the count is set to zero.
Step A7: The ratio 3000/4000 is less than 80% at this point, therefore no more licensed-amount-increasing process is triggered.
Step A8: If a ratio of the current service flow to a flow corresponding to the total licensed amount allocated for the service is still greater than 80%, then Step A6 is executed again. If no surplus licensed amount exists at present, then a warning is given.

### A licensed-amount-decreasing process:

Configuring related parameters by the configuring module includes that: the control center module collects a service flow on a blade server at an interval of 30 seconds during two minutes; the number of times that an actual flow of a service exceeds 80% of a flow of the service corresponding to one licensed amount is three, and a licensed amount adjustment valley value is 10%. The number of total licenses configured currently is five, a flow corresponding to a licensed amount allocated for an SMS service is a flow of 2000 SMS messages, a flow corresponding to a licensed amount allocated for an MMS service is a flow of 200 MMS messages, and a flow corresponding to a licensed amount allocated for a WAP service is a flow of 2000 WAP messages. Corresponding relationships between the licensed amount and service flows of respective services are set as follows: one license corresponds to 2000 SMS messages, one license corresponds to 200 MMS messages, and one license corresponds to 1000 WAP messages. Thus, there is one surplus license. When the licensed amount is adjusted, the number of the license decreases by one each time.
Step B1: The related parameters configured by the configuring module are updated at the control center module simultaneously.
Step B2: The control center module acquires, from the scheduling center module, information such as an address of a currently deployed blade server, a type of a service processed by the blade server and the like.
Step B3: The control center module collects flow information of all services from the blade servers every 30 seconds in a duration of two minutes, then calculates an average flow of each service, and obtains a current SMS flow of 1000 SMS messages, a current f MMS flow of 100 MMS messages, and a current WAP flow of 180 WAP messages.
Step B4: When it is detected that the current flow of the WAP service is of 180 WAP messages, the ratio 200/2000 is less than 10% at this point. A count is set to one, and detection is made for the next duration.
Step B5: When the count is below three, if the flow of the SMS service in the next duration is less than 200, then the number of surpasses of the licensed amount adjustment valley value counted in the previous duration is set to zero. Then, Step B3 is executed to continue to collect.
Step B6: When the count reaches three, the control center module begins to decrease the licensed amount allocated for the WAP service by an amount corresponding to 1000 WAP messages. At this moment, the count is set to zero. If currently there is only one license allocated for the WAP service, then no licensed-amount-decreasing process will be triggered even if a current utilization ratio is below 10%, so as to ensure a normal operation of a service.

### A blade-server-increasing process:

Configuring related parameters by the configuring module includes that: the control center module collects a service flow on a blade server at an interval of 30 seconds during two minutes; the number of times that an actual flow of a service exceeds 80% of a flow of the service corresponding to one licensed amount is three, and a range of a licensed amount of a blade server is one license, for example, for an MMS service, a capability of a blade server in bearing a certain service is of 0 to 200 MMS messages. The number of total licenses configured currently is five, a flow corresponding to a licensed amount allocated for an SMS service is a flow of 2000 SMS messages, a flow corresponding to a licensed amount allocated for an MMS service is a flow of 200 MMS messages, and a flow corresponding to a licensed amount allocated for a WAP service is a flow of 1000 WAP messages. Corresponding relationships between the licensed amount and service flows of respective services are set as follows: one license corresponds to 2000 SMS messages, one license corresponds to 200 MMS messages, and one license corresponds to 1000 WAP messages. Thus, there are two surplus licenses. When the number of blade servers is adjusted, one blade server is added each time.
Step C1: The related parameters configured by the configuring module are updated at the control center module simultaneously.
Step C2: The control center module acquires, from the scheduling center module, information such as an address of a currently deployed blade server, a type of a service processed by the blade server and the like.
Step C3: The control center module collects flow information of all services from the blade servers every 30 seconds in a duration of two minutes, then calculates an average flow of each service, and detects a flow of 300 MMS messages on a blade server on which the MMS service is currently running, which flow exceeds the peak value of the licensed amount 200 of the blade server.
Step C4: When an average flow collected in three consecutive equal durations is still greater than 200 MMS messages, the control center module sends a blade-capacity increasing request to the scheduling center module.
Step C5: After receiving the request, the scheduling center module adds the MMS service in an idle blade server, such that the 100 extra MMS messages may be born, the control center module decreases the number of idle blade servers by one. If no idle blade server exists at present, then a warning is given.

### A blade-server-decreasing process:

Configuring related parameters by the configuring module includes that: the control center module collects a service flow on a blade server at an interval of 30 seconds during two minutes; the number of times that an actual flow of a service exceeds 80% of a flow of the service corresponding to one licensed amount is three, and a range of a licensed amount of a blade server is one license, for example, for an MMS service, a capability of a blade server in bearing a certain service is of 0 to 200 MMS messages. The number of total licenses configured currently is five, a flow corresponding to a licensed amount allocated for an SMS service is a flow of 2000 SMS messages, a flow corresponding to a licensed amount allocated for an MMS service is a flow of 200 MMS messages, and a flow corresponding to a licensed amount allocated for a WAP service is a flow of 2000 WAP messages. Corresponding relationships between the licensed amount and service flows of respective services are set as follows: one license corresponds to 2000 SMS messages, one license corresponds to 200 MMS messages, and one license corresponds to 1000 WAP messages. Thus, there is one surplus license. When the number of blade servers is adjusted, one blade server is removed each time.
Step D1: The related parameters configured by the configuring module are updated at the control center module simultaneously.
Step D2: The control center module acquires, from the scheduling center module, information such as an address of a currently deployed blade server, a type of a service processed by the blade server and the like.
Step D3: The control center module collects flow information of all services from the blade servers every 30 seconds in a duration of two minutes, then calculates an average flow of each service, and detects a flow of 150 WAP messages on a blade server on which the WAP service is currently running, which flow is less than the valley value of the licensed amount 200 of the blade server.
Step D4: At the moment, the control center module determines that the processing capacity of the two blade servers occupied by the WAP service is of 2000 WAP messages, while the current flow is only of 150 WAP messages, in which case the control center module sends a blade-capacity decreasing request to the scheduling center module.
Step C5: After receiving the request, the scheduling center module makes a blade server on which the WAP service is running an idle blade server. The other blade server bears the service of 150 WAP messages, and the control center module increases the number of idle blade servers by one. If currently there is only one blade server on which the WAP service is running, then no blade-server-decreasing process is triggered.

With the resource optimization method based on service licensing and device thereof according to the disclosure, based on unified license management of different services in actual operation, blade server resources can be utilized reasonably and efficiently by taking into consideration a capacity of a blade server to bear a corresponding service and a running condition of the service, such that each service can be better developed and license resources are utilized to the greatest extent.

A more thorough and specific understanding of the technical means adopted by the disclosure for achieving a predetermined purpose and effects thereof can be achieved by description of specific implementations. However, what shown in the drawings are only intended for reference and illustration instead of limiting the disclosure.

## Claims

1. A resource optimization method based on service licensing, comprising:
configuring a range of a licensed amount of a blade server and conversion relationships between respective service flows and the licensed amount;
monitoring a service and a service flow on each blade server; and
when the monitored service flow on a blade server is not within a range of a service flow corresponding to the range of the licensed amount of the blade server, optimizing use of the blade server.

2. The method according to claim 1, wherein the range of the licensed amount of the blade server comprises: a range from a valley value of the licensed amount of the blade server to a peak value of the licensed amount of the blade server.

3. The method according to claim 2, wherein the step of optimizing use of the blade server when the monitored service flow on a blade server is not within a range of a service flow corresponding to the range of the licensed amount of the blade server comprises:
when the monitored service flow on the blade server is greater than or equal to a service flow corresponding to the peak value of the licensed amount of the blade server, calling an idle blade server to process the monitored service flow; and
when the monitored service flow on the blade server is less than a service flow corresponding to the valley value of the licensed amount of the blade server, scheduling the blade server as an idle blade server while ensuring a normal operation of the service.

4. The method according to any one of claims 1 to 3, further comprising: configuring a licensed amount adjustment parameter;
when monitoring the service and the service flow on each blade server, summing service flows of each type of service on blade servers according to types of services to obtain a service flow corresponding to the each type of service; and
after the optimizing use of the blade server, when the service flow of a service on a blade server satisfies a licensed amount adjustment condition, adjusting the licensed amount of the service.

5. The method according to claim 4, wherein the licensed amount adjustment parameter comprises: a licensed amount adjustment peak value and a licensed amount adjustment valley value;
the step of when the service flow of a service on a blade server satisfies a licensed amount adjustment condition, adjusting the licensed amount of the service comprises:
when a ratio of a current service flow of the service to a flow corresponding to the licensed amount allocated for the service is greater than or equal to the licensed amount adjustment peak value, allocating a new licensed amount for the service; and
when a ratio of a current service flow of the service to a flow corresponding to the licensed amount allocated for the service is less than the licensed amount adjustment valley value, making a part of the licensed amount occupied by the service to be a surplus licensed amount while ensuring a normal operation of the service.

6. A resource optimization device based on service licensing, comprising: a configuring module, a control center module, and a scheduling center module, wherein
the configuring module is configured to configure a range of a licensed amount of a blade server and conversion relationships between respective service flows and the licensed amount;
the control center module is configured to: monitor a service and a service flow on each blade server; and when the monitored service flow on a blade server is not within a range of a service flow corresponding to the range of the licensed amount of the blade server, control the scheduling center module to optimize use of the blade server; and
the scheduling center module is configured to optimize use of a blade server.

7. The device according to claim 6, wherein the range of the licensed amount of the blade server comprises: a range from a valley value of the licensed amount of the blade server to a peak value of the licensed amount of the blade server.

8. The device according to claim 7, wherein the control center module is further configured to:
when the monitored service flow on the blade server is greater than or equal to a service flow corresponding to the peak value of the licensed amount of the blade server, instruct the scheduling center module to call an idle blade server to process the monitored service flow; and
when the monitored service flow on the blade server is less than a service flow corresponding to the valley value of the licensed amount of the blade server, to instruct the scheduling center module to schedule the blade server as an idle blade server while ensuring a normal operation of the service.

9. The device according to any one of claims 6 to 8, wherein the configuring module is further configured to: configure a licensed amount adjustment parameter; and
the control center module is further configured to: sum monitored service flows of each type of service on blade servers according to types of monitored services to obtain a service flow corresponding to the each type of service; and after optimizing use of a blade server, when the service flow of a service on a blade server satisfies a licensed amount adjustment condition, adjust the licensed amount of the service.

10. The device according to claim 9, wherein the licensed amount adjustment parameter comprises: a licensed amount adjustment peak value and a licensed amount adjustment valley value; and
the control center module is further configured to:
when a ratio of a current service flow of the service on a blade server to a flow corresponding to the licensed amount allocated for the service is greater than or equal to the licensed amount adjustment peak value, allocate a new licensed amount for the service; and
when a ratio of a current service flow of the service to a flow corresponding to the licensed amount allocated for the service is less than the licensed amount adjustment valley value, make a part of the licensed amount occupied by the service to be a surplus licensed amount while ensuring a normal operation of the service.
